# EUROPEAN PATENT SPECIFICATION

(11) **EP 3 421 943 B1**
(45) Date of publication and mention of the grant of the patent: **20.11.2019**
(21) Application number: 18177141.1
(22) Date of filing: 12.06.2018
(51) Int. Cl.: G01D 11/24

(54) **SENSOR APPARATUS**
SENSORVORRICHTUNG
APPAREIL DE DÉTECTION

(30) Priority: 29.06.2017 CN 201720779797 U
(43) Date of publication of application: 02.01.2019
(73) Proprietor: Siemens Ltd., China, Chaoyang District Beijing P.R. China 100102 (CN)
(72) Inventor: LIU, Hai, Kunshan, 215300 (CN); TAO, Xi, Suzhou, 215128 (CN); BIE, Hai Gang, Shanghai, 201104 (CN); CHEN, Liang, Suzhou, 215000 (CN)
(74) Representative: Isarpatent

(56) References cited:
- WO-A1-2005/031273
- JP-A- 2000 314 744
- KR-A- 20100 053 914
- KR-B1- 100 799 810
- KR-B1- 101 700 758
- US-A1- 2015 226 585

## Description

### BACKGROUND

### Technical Field

The present invention relates to a sensor apparatus, particularly a sensor apparatus integrating multiple sensors.

### Related Art

In a sensor apparatus, it is usually necessary to integrate multiple sensors. In production, the current practice is to design and customize according to the specific type of the sensors and the number of sensors. However, such sensor apparatus has poor expansibility and higher cost.

Korean patent KR 100 799 810 B1 describes a sensor apparatus comprising a base, a mounting stem arranged on the base, a plurality of sensor units each comprising a partition and a sensor module and a fixture for fixing the sensor units in cooperation with the mounting stem.

A similar sensor apparatus comprising partitions, a base, a stem and a plurality of sensor units is also described in Korean patent KR 101 700 758 B1.

### SUMMARY

According to the present invention, a sensor apparatus having the features of claim 1 is provided, which facilitates the expansion of the sensor unit and lowers the cost.

The sensor apparatus provided by the present invention comprises a box, a mounting stem, a plurality of sensor units and a fixture. The box has a mounting direction, and comprises a base and a shell along the mounting direction. The shell is connected with the base in a clamping manner; the mounting stem is arranged on the base along the mounting direction; and each of the sensor units comprises a partition and a sensor module. The partition sleeves the mounting stem and stacked along the mounting direction, and the sensor module is arranged on the partition; and the fixture is capable of fixing the sensor units in cooperation with the mounting stem.

The box comprises the base and the shell which are connected in a clamping manner, and thus, is convenient to open; and the sensor units are stacked through the mounting stem, which facilitates the direct addition of the sensor units, so the expansibility is high and the cost is effectively lowered.

According to the present invention, the sensor unit further comprises a protective housing, wherein the protective housing is provided with a locating hole corresponding to the mounting stem.

In another exemplary implementation of the sensor apparatus, the shape of the partition corresponds to that of the protective housing, the partition is provided with a mounting hook facing the protective housing, the protective housing can be clamped onto the partition, and the partition and the protective housing are provided with heat dissipation holes.

In yet another exemplary implementation of the sensor apparatus, the base comprises a sealing side wall and a sealing cover. The sealing side wall extends along the mounting direction, vent holes communicating with the outside of the base are formed between a side wall of the base and the sealing side wall, the shape of the sealing cover corresponds to that of the sealing side wall, the mounting stem is fixed to the sealing cover, the sealing side wall and the sealing cover form a seal box, and the sealing cover is provided with a cable waterproof joint communicating with the inside of the seal box.

In yet another exemplary implementation of the sensor apparatus, the box is a cylindrical box.

In yet another exemplary implementation of the sensor apparatus, the sensor apparatus further comprises a plurality of first clamping pieces arranged on the shell along the circumferential direction of the box, and each of the first clamping pieces has an elastic hook facing the base; the sealing cover is provided with clamping portions cooperating with the elastic hooks; wherein the elastic hook can move along the mounting direction A toward the base to enter into the base along with the shell and rotate along the axial direction of the box along with the shell to abut against the clamping portion so as to clamp the shell to the base.

Hereinafter, the preferred embodiments will be described in a clear and understandable manner with reference to the accompanying drawings, and the above characteristics, technical features, advantages and implementations of the sensor apparatus will be further described.

### BRIEF DESCRIPTION OF THE DRAWINGS

The following drawings merely illustrate and explain the present invention schematically, and do not limit the scope of the present invention.
FIG. 1 is an exploded schematic view of an exemplary implementation of the sensor apparatus.
FIG. 2 is a partial structural schematic view of another exemplary implementation of the sensor apparatus.
FIG. 3 is a partial structural schematic view of still another exemplary implementation of the sensor apparatus.
FIG. 4 is a partial structural schematic view of the sensor apparatus shown in FIG. 3 from another angle.
FIG. 5 is a partial structural schematic view of still another exemplary implementation of the sensor apparatus.

### Description of symbols

10 Box
11 Vent Holes
12 Base
13 Sealing Side Wall
14 Shell
15 Sealing Cover
16 Cable Waterproof Joint
17 First Clamping Pieces
18 Elastic Hooks
19 Clamping Portions
20 Mounting Stem
30 Sensor Units
32 Partition
34 Sensor Module
36 Protective Housing
37 Locating Hole
38 Mounting Hooks
40 Fixture
A Mounting Direction

### DETAILED DESCRIPTION

For a clearer understanding of the technical features, objectives and effects of the present invention, the specific implementations of the present invention will be described with reference to the accompanying drawings, in which like reference numerals refer to components having the same structure or similar structure but having the same function.

"Exemplary" herein means "serving as a case, example, or illustration", and any illustration or implementation described herein as "exemplary" should not be interpreted as a more preferred or more advantageous technical solution.

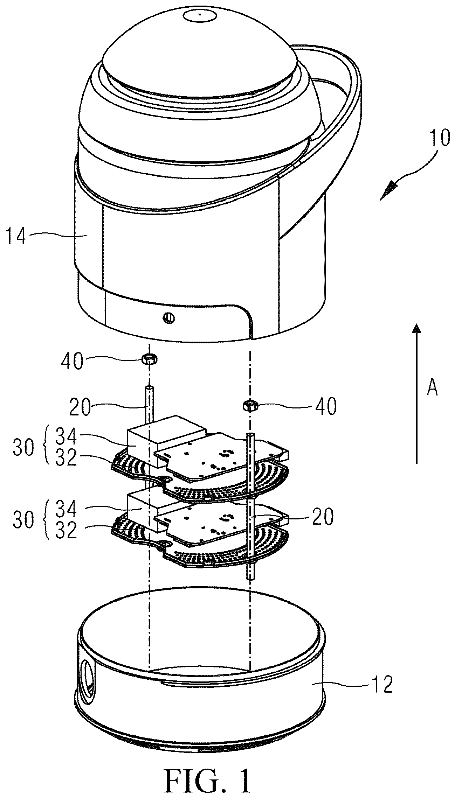

FIG. 1 is an exploded schematic view of an exemplary implementation of the sensor apparatus. Referring to FIG. 1, the sensor apparatus comprises a box 10, a mounting stem 20, a plurality of sensor units 30 and a fixture 40. In the exemplary implementation, the box 10 is a cylindrical box 10, but is not limited thereto. In other exemplary implementations, the box 10 may have other shapes. The box 10 has a mounting direction A, and the box 10 comprises a base 12 and a shell 14 along the mounting direction A. The shell 14 is connected with the base 12 in a clamping manner. The mounting stem 20 is arranged on the base 12 along the mounting direction A. Each of the sensor units 30 comprises a partition 32 and a sensor module 34. The partition 32 sleeves the mounting stem 20 and stacked along the mounting direction A, the sensor module 34 is arranged on the partition 32, and in order to provide a mounting space for the sensor module 34, a stop block or the like can be arranged between the partitions. Although there are two sensor units 30 in the exemplary implementation, it is certainly also possible to set the number according to the actual situation. The fixture 40 is capable of fixing the sensor units 30 in cooperation with the mounting stem 20, and the fixture may be a buckle, and certainly may also be a nut shown in the figure.

According to the sensor apparatus provided by the present invention, the box 10 comprises the base 12 and the shell 14 which are connected in a clamping manner, and thus, is convenient to open. The sensor units 30 are stacked through the mounting stem 20, which facilitates the direct addition of the sensor units 30, so the expansibility is high and the cost can be effectively lowered.

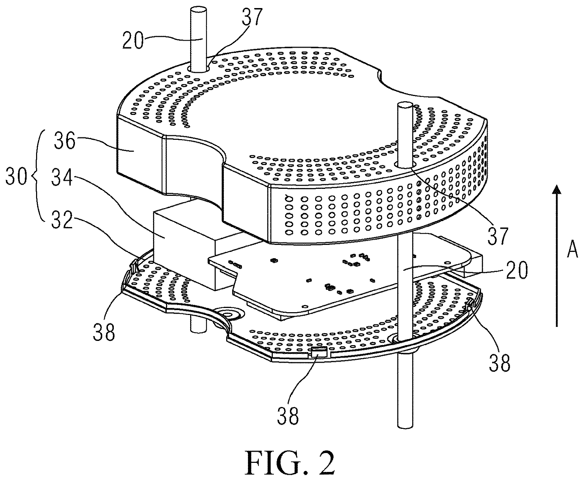

FIG. 2 is a partial structural schematic view of another exemplary implementation of the sensor apparatus. Referring to FIG. 2, the sensor unit 30 further comprises a protective housing 36, and the protective housing 36 is provided with a locating hole 34 corresponding to the mounting stem 20. The shape of the partition 32 corresponds to that of the protective housing 36, the partition 32 is provided with a mounting hook 38 facing the protective housing 36, and the protective housing 36 can be clamped onto the partition 32, so the structure is firmer. The partition 32 and the protective housing 36 are provided with heat dissipation holes for dissipating heat of the sensor module 34. The protective housing 36 can sleeve the mounting stem 20 and protect the sensor unit 30.

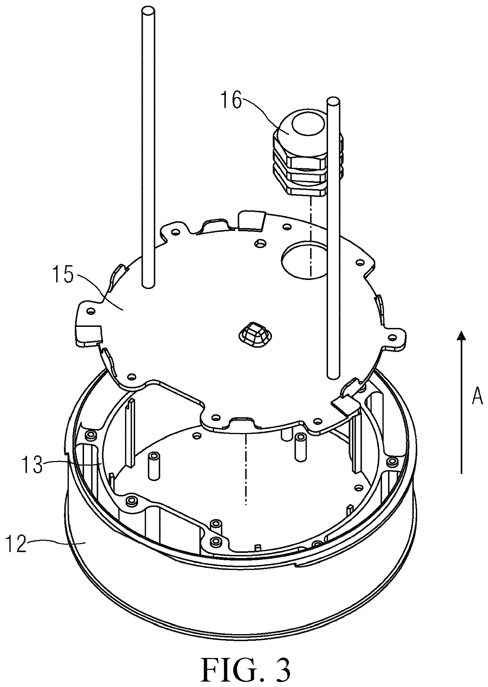

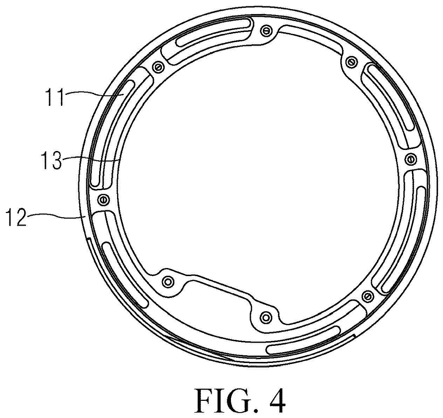

FIG. 3 is a partial structural schematic view of still another exemplary implementation of the sensor apparatus. Referring to FIG. 3, the base 12 comprises a sealing side wall 13 and a sealing cover 15. The sealing side wall 13 extends along the mounting direction A. Referring to FIG. 4, vent holes 11 communicating with the outside of the base are formed between a side wall of the base 12 and the sealing side wall 13, the shape of the sealing cover 15 corresponds to that of the sealing side wall 13, the mounting stem 20 is fixed to the sealing cover 15, the sealing side wall 13 and the sealing cover 15 form a seal box, and the sealing cover 15 is provided with a cable waterproof joint 16 communicating with the inside of the seal box. The vent holes 11 can ensure other sensors inside the box to contact gas in the environment, and the sensor units or other circuit components with waterproof requirements can be arranged in the seal box and connected through the cable waterproof joint, so that the sensor apparatus can better protect the inside components.

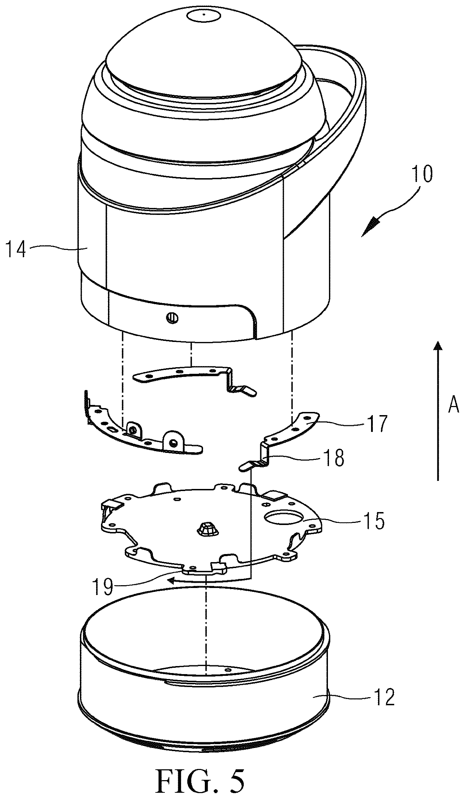

FIG. 5 is a partial structural schematic view of still another exemplary implementation of the sensor apparatus. Referring to FIG. 5, the sensor apparatus further comprises a plurality of first clamping pieces 17 (only one is shown in the figure) arranged on the shell 14 along the circumferential direction of the box 10, and each of the first clamping pieces 17 has an elastic hook 18 (only one is shown in the figure) facing the base 12; and as shown in the figure, the elastic hook 18 may be formed by firstly extending toward the base 12 and then extending along the tangent line of the circumferential direction of the shell 14. The sealing cover 15 is provided with, along the circumferential direction, clamping portions 19 cooperating with the elastic hooks 18. The elastic hook 18 can move along the mounting direction A toward the base 12 to enter into the base 12 along with the shell 14 and rotate along the axial direction of the box 10 along with the shell 14 to abut against the clamping portion 19 so as to clamp the shell 14 to the base 12.

It should be understood that although this specification is described in terms of various embodiments, not every embodiment includes only one single technical solution. This description manner of the specification is merely for clarity, and those skilled in the art should consider the specification as a whole. The technical solutions in the embodiments can also be combined as appropriate to form other implementations that can be understood by those skilled in the art.

## Claims

1. A sensor apparatus, the sensor apparatus comprising:
a box (10) having a mounting direction (A) wherein the box (10), along the mounting direction (A), comprises: a base (12) and a shell (14) connected with the base (12) in a clamping manner;
a mounting stem (20) arranged on the base (12) along the mounting direction (A);
a plurality of sensor units (30) wherein each of the sensor units (30) comprises: a partition (32) forming a sleeving for the mounting stem (20) and stacked along the mounting direction (A), and a sensor module (34) arranged on the partition (32), and a protective housing (36) covering the sensor module (34), wherein the protective housing (36) is provided with a locating hole (37) corresponding to the mounting stem (20); and
a fixture (40) wherein the fixture (40) is capable of fixing the sensor units (30) in cooperation with the mounting stem (20).

2. The sensor apparatus of claim 1, **characterized in that** the shape of the partition (32) corresponds to that of the protective housing (36), the partition (32) is provided with a mounting hook (38) facing the protective housing (36), the protective housing (36) can be clamped onto the partition (32), and the partition (32) and the protective housing (36) are provided with heat dissipation holes.

3. The sensor apparatus according to any of the preceding claims, **characterized in that** the base (12) further comprises:
a sealing side wall (13) extending along the mounting direction (A), wherein vent holes (11) communicating with the outside of the base are formed between a side wall of the base (12) and the sealing side wall (13), and
a sealing cover (15) in a shape corresponding to the sealing side wall (13), wherein the mounting stem (20) is fixed to the sealing cover (15), the sealing side wall (13) and the sealing cover (15) form a seal box, and the sealing cover (15) is provided with a cable waterproof joint (16) communicating with the inside of the seal box.

4. The sensor apparatus of claim 3, **characterized in that** the box (10) is a cylindrical box.

5. The sensor apparatus of claim 4, **characterized in that**:
the shell (14) further comprises a plurality of first clamping pieces (17) arranged on the shell (14) along the circumferential direction of the box (10), and each of the first clamping piece (17) has an elastic hook (18) facing the base (12); and
the sealing cover (15) is provided with clamping portions (19) cooperating with the elastic hooks (18);
wherein the elastic hook (18) can move along the mounting direction (A) toward the base (12) to enter into the base (12) along with the shell (14) and rotate along the axial direction of the box (10) along with the shell (14) to abut against the clamping portion (19) so as to clamp the shell (14) to the base (12).

## Patentansprüche

1. Sensorvorrichtung, wobei die Sensorvorrichtung Folgendes umfasst:
einen Kasten (10), der eine Montagerichtung (A) besitzt, wobei der Kasten (10) längs der Montagerichtung (A) Folgendes umfasst: eine Basis (12) und eine Hülle (14), die mit der Basis (12) klemmend verbunden ist;
einen Montageschaft (20), der an der Basis (12) längs der Montagerichtung (A) angeordnet ist;
mehrere Sensoreinheiten (30), wobei jede der Sensoreinheiten (30) Folgendes umfasst: eine Trennwand (32), die für den Montageschaft (20) eine Hülse bildet und längs der Montagerichtung (A) gestapelt ist, ein Sensormodul (34), das an der Trennwand (32) angeordnet ist, und ein Schutzgehäuse (36), das das Sensormodul (34) abdeckt, wobei das Schutzgehäuse (36) mit einem Lokalisierungsloch (37) versehen ist, das dem Montageschaft (20) entspricht; und
eine Befestigungseinrichtung (40), wobei die Befestigungseinrichtung (40) die Sensoreinheiten (30) in Zusammenwirkung mit dem Montageschaft (20) befestigen kann.

2. Sensorvorrichtung nach Anspruch 1, **dadurch gekennzeichnet, dass** die Form der Trennwand (32) jener des Schutzgehäuses (36) entspricht, wobei die Trennwand (32) mit einem Montagehaken (38) versehen ist, der dem Schutzgehäuse (36) zugewandt ist, wobei das Schutzgehäuse (36) an die Trennwand (32) geklemmt werden kann und die Trennwand (32) und das Schutzgehäuse (36) mit Wärmeabführungslöchern versehen sind.

3. Sensorvorrichtung nach einem der vorhergehenden Ansprüche, **dadurch gekennzeichnet, dass** die Basis (12) ferner Folgendes umfasst:
eine abdichtende Seitenwand (13), die sich längs der Montagerichtung (A) erstreckt, wobei zwischen einer Seitenwand der Basis (129 und der abdichtenden Seitenwand (13) Belüftungslöcher (11) gebildet sind, die mit der äußeren Umgebung der Basis kommunizieren, und
eine abdichtende Abdeckung (15) mit einer Form, die der abdichtenden Seitenwand (13) entspricht, wobei der Montageschaft (20) an der abdichtenden Abdeckung (15) befestigt ist, die abdichtende Seitenwand (13) und die abdichtende Abdeckung (15) einen dichten Kasten bilden und die abdichtende Abdeckung (15) mit einer wasserdichten Kabelverbindung (16) versehen ist, die mit dem Innenraum des Abdichtungskastens kommuniziert.

4. Sensorvorrichtung nach Anspruch 3, wobei der Kasten (10) ein zylindrischer Kasten ist.

5. Sensorvorrichtung nach Anspruch 4, **dadurch gekennzeichnet, dass**:
das Gehäuse (14) ferner mehrere erste Klemmteile (17) enthält, die an dem Gehäuse (14) in Umfangsrichtung des Kastens (10) angeordnet sind, und jedes der ersten Klemmteile (17) einen elastischen Haken (18) besitzt, der der Basis (12) zugewandt ist; und
die abdichtende Abdeckung (15) mit Klemmabschnitten (19) versehen ist, die mit den elastischen Haken (18) zusammenwirken;
wobei sich der elastische Haken (18) längs der Montagerichtung (A) zu der Basis (12) bewegen kann, um zusammen mit dem Gehäuse (14) in die Basis (12) einzutreten und sich in axialer Richtung des Kastens (10) zusammen mit dem Gehäuse (14) zu drehen, um an dem Klemmabschnitt (19) anzuliegen, um so das Gehäuse (14) an der Basis (12) festzuklemmen.

## Revendications

1. Appareil capteur, l'appareil capteur comprenant :
une boîte (10) ayant une direction de montage (A) dans lequel la boîte (10), le long de la direction de montage (A), comprend : une base (12) et une coque (14) raccordée à la base (12) par serrage ;
une tige de montage (20) agencée sur la base (12) le long de la direction de montage (A) ;
une pluralité d'unités de capteur (30) dans lequel chacune des unités de capteur (30) comprend : une séparation (32) formant une gaine pour la tige de montage (20) et empilée le long de la direction de montage (A), et un module de capteur (34) agencé sur la séparation (32), et un logement de protection (36) couvrant le module de capteur (34), dans lequel le logement de protection (36) est pourvu d'un trou de positionnement (37) correspondant à la tige de montage (20) ; et
une fixation (40) dans lequel la fixation (40) est capable de fixer les unités de capteur (30) en coopération avec la tige de montage (20).

2. Appareil capteur selon la revendication 1, **caractérisé en ce que** la forme de la séparation (32) correspond à celle du logement de protection (36), la séparation (32) est pourvue d'un crochet de montage (38) faisant face au logement de protection (36), le logement de protection (36) peut être serré sur la séparation (32), et la séparation (32) et le logement de protection (36) sont pourvus de trous de dissipation de chaleur.

3. Appareil capteur selon l'une quelconque des revendications précédentes, **caractérisé en ce que** la base (12) comprend en outre :
une paroi latérale d'étanchéité (13) s'étendant le long de la direction de montage (A), dans lequel des trous de ventilation (11) communiquant avec l'extérieur de la base sont formés entre une paroi latérale de la base (12) et la paroi latérale d'étanchéité (13), et
un couvercle d'étanchéité (15) en une forme correspondant à la paroi latérale d'étanchéité (13), dans lequel la tige de montage (20) est fixée au couvercle d'étanchéité (15), la paroi latérale d'étanchéité (13) et le couvercle d'étanchéité (15) forment une boîte d'étanchéité, et le couvercle d'étanchéité (15) est pourvu d'un joint d'imperméabilisation de câble (16) communiquant avec l'intérieur de la boîte d'étanchéité.

4. Appareil capteur selon la revendication 3, **caractérisé en ce que** la boîte (10) est une boîte cylindrique.

5. Appareil capteur selon la revendication 4, **caractérisé en ce que** :
la coque (14) comprend en outre une pluralité de premières pièces de serrage (17) agencées sur la coque (14) le long de la direction circonférentielle de la boîte (10), et chacune des premières pièce de serrage (17) a un crochet élastique (18) faisant face à la base (12) ; et
le couvercle d'étanchéité (15) est pourvu de portions de serrage (19) coopérant avec les crochets élastiques (18) ;
dans lequel le crochet élastique (18) peut se déplacer le long de la direction de montage (A) vers la base (12) pour entrer dans la base (12) conjointement avec la coque (14) et entrer en rotation le long de la direction axiale de la boîte (10) conjointement avec la coque (14) pour prendre appui contre la portion de serrage (19) afin de serrer la coque (14) sur la base (12).
